# EUROPÄISCHE PATENTSCHRIFT

(11) **EP 2 261 590 B1**
(45) Veröffentlichungstag und Bekanntmachung des Hinweises auf die Patenterteilung: **05.08.2020**
(21) Anmeldenummer: 10005793.4
(22) Anmeldetag: 04.06.2010
(51) Int. Cl.: F41G 5/08, G01S 5/16, G01S 11/12

(54) **Verfahren und Vorrichtung zur Messung der Entfernung zu einem anfliegenden Ziel**
Method and device for measuring the distance to a flying target
Procédé et dispositif de mesure de l'éloignement d'une cible volante

(30) Priorität: 10.06.2009 DE 102009024444
(43) Veröffentlichungstag der Anmeldung: 15.12.2010
(73) Patentinhaber: MBDA Deutschland GmbH, 86529 Schrobenhausen (DE)
(72) Erfinder: von Loeben, Bernd, 82024 Taufkirchen (DE)
(74) Vertreter: Isarpatent

(56) Entgegenhaltungen:
- WO-A1-92/14982
- US-A- 2 431 625
- US-A- 3 002 093
- US-A- 5 008 543
- US-A- 5 992 292

## Beschreibung

Die Erfindung betrifft eine Vorrichtung zur Messung der Entfernung zu einem anfliegenden Ziel unter Verwendung eines auf einer auf das Ziel nachführbaren Plattform fest montierten ersten passiven Infrarot-Ortungsgeräts und einer Zusatzvorrichtung.

In üblicher Weise erfolgt die Erfassung und Verfolgung anfliegender Ziele , wie beispielsweise Flugzeuge, Hubschrauber oder Drohnen, mit der Unterstützung von Radargeräten. Die aktive Erfassung von Zielen erhöht jedoch in unerwünschter Weise die Entdeckung der hierbei verwendeten Einrichtungen.

Aus der DE-AS 22 30 407 ist ein Verfahren zur eindeutigen Bestimmung der Position eines tief anfliegenden Ziels bekannt geworden. Die hier zu lösende Aufgabe bestand darin, den bekannten Spiegeleffekt von Radargeräten mit der Hilfe eines IR-Geräts zu eliminieren, um zu verhindern, dass ein verschossener Flugkörper versehentlich auf das Spiegelbild des Ziels gelenkt wird. Für dieses Verfahren werden ein aktives Feuerleitradar und eine fest mit der Radarantenne verbundene Zusatzvorrichtung verwendet. Das Problem der unerwünschten Entdeckbarkeit ist jedoch hiermit nicht gelöst. Die US 2,431,625 A beschreibt ein System zur Wärmedetektion.

Die Druckschrift WO 92/14982 A1 beschreibt eine Vorrichtung zur Zielnachführung abhängig von einer Blickrichtung des Benutzers. Die Blickrichtung des Benutzers kann hierbei gegenüber einer Position eines Objekts auf einem Bildschirm ermittelt werden.

Der Erfindung liegt nun die Aufgabe zugrunde mit Hilfe passiver Systeme die Entfernung zum Ziel möglichst genau festzustellen. Außerdem soll die Möglichkeit geschaffen werden, Vögel von eigentlichen Zielen unterscheiden zu können.

Die Aufgabe wird durch die Vorrichtung gemäß der Erfindung und dem Anspruch 1 gelöst. Dabei kann nach erfolgter Erfassung und Aufschaltung des ersten passiven Infrarot-Ortungsgeräts (3) auf das anfliegende Ziel mit Hilfe eines als Zusatzgerät in einer bekannten Entfernung (a) vom ersten passiven Infrarot-Ortungsgerät auf der nachführbaren Plattform montierten weiteren passiven Infrarot-Ortungsgeräts (4), welches ebenfalls auf das anfliegende Ziel ausgerichtet und diesem nachgeführt wird (über die Plattform 2 in Azimut und Elevation), die Entfernung zum anfliegenden Ziel aus der trigonometrischen Beziehung des Winkels α zwischen den beiden Infrarot-Ortungsgeräte bestimmt wird.

Auf diese sehr einfache Weise kann mit Hilfe eines fest montierten und eines nachführbaren Infrarot-Ortungsgeräts zum einen die Plattform mit der Waffe in Richtung auf das Ziel nachgeführt werden (8) und zum anderen fortlaufend die tatsächliche Entfernung zum erfassten Ziel errechnet werden. Daraus lässt sich beispielsweise mit Hilfe eines Rechners ermitteln, wann die Waffe zum Einsatz kommen kann (mit Hilfe der Winkelgeschwindigkeiten (11) und der Daten der zur Verfügung stehenden Waffe (12)). Gleichzeitig kann man aus der Bewegung und der errechneten Entfernung des Ziels ableiten, ob es sich um ein echtes Ziel oder um einen Vogel handelt.

Weiterhin wird vorgeschlagen, dass an einer auf ein Ziel bezüglich Azimut und Richteinheiten (Elevation) nachführbaren Plattform ein erstes passives Infrarot-Ortungsgerät fest montiert ist und dass ein weiteres passives Infrarot-Ortungsgerät in einer azimutalen Entfernung zum ersten passiven Ortungsgerät auf der Plattform schwenkbar und/oder auf das Ziel nachführbar angeordnet ist, wobei beide passiven Infrarot-Ortungsgeräte mit einem Rechner verbunden sind, dessen Ausgangssignal für die Schussfreigabe relevant ist.

Mit der beschriebenen Anordnung lässt sich eine Genauigkeit der Nachführung in der Größenordnung von weniger als 0,1 mrad erzielen, weil das Ortungsgerät auf dem wärmsten Punkt des Ziels verbleibt. Dies sind üblicherweise die Rumpfspitze und die Tragflächenvorderkanten.

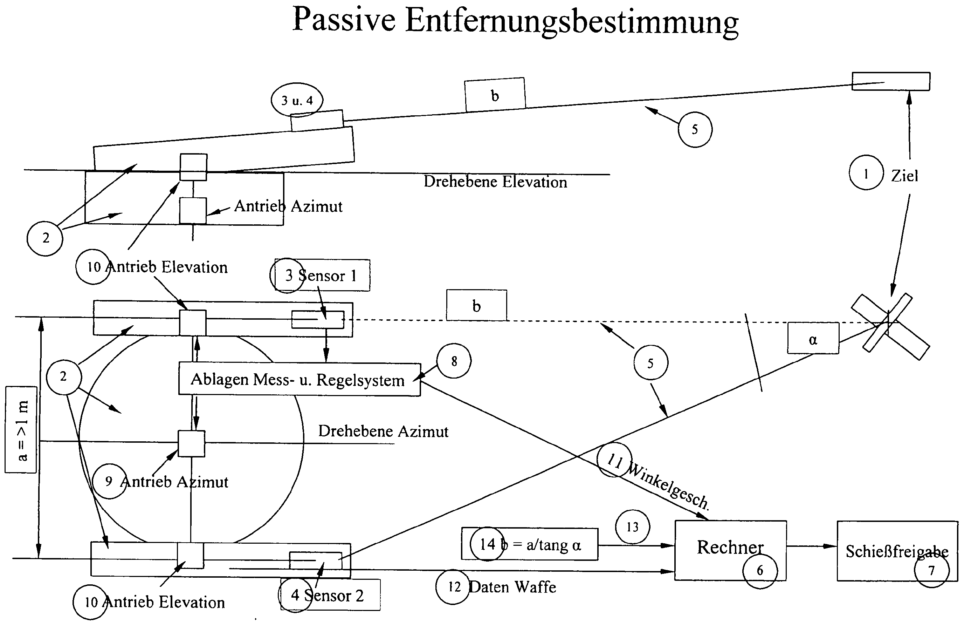

Ein Ausführungsbeispiel der Erfindung ist in der Zeichnung schematisch vereinfacht dargestellt und wird in folgenden näher beschrieben. Die einzige Figur der Zeichnung zeigt eine Seitenansicht und eine Draufsicht einer Vorrichtung zur Durchführung einer Bestimmung der Entfernung zu einem anfliegenden Ziel.

In der Figur ist eine Vorrichtung in einer Seitenansicht und einer Draufsicht dargestellt. Gemäß der Draufsicht ist auf einer Plattform 2, welche beispielsweise die Plattform einer Abschusseinrichtung für Flugkörper oder einer richtbare Waffe sein kann, ein erstes passives Infrarot-Ortungsgerät 3 fest montiert. In einem möglichst großen seitlichen Abstand a ist ein weiteres passives Infrarot-Ortungsgerät 4 angeordnet. Dieses kann mittels mechanischer Verschwenkung auf das Ziel 1 nachgeführt werden oder fest montiert sein, wobei die Nachführung auf das Ziel 1 elektromechanisch erfolgt.

Die Plattform 2 selbst ist mittels eines Azimut-Antriebs 9 horizontal in Richtung auf das Ziel 1 nachführbar. Für die Ausrichtung in Elevationsrichtung ist ein Elevations-Antrieb 10 vorgesehen. Mit Hilfe eines Ablagen- Mess- und - Regelsystems 8 werden Signale erzeugt, von denen die Winkelgeschwindigkeit 11 der Plattform 2 direkt dem Rechner 6 zugeleitet wird. Die weiteren für die Entfernungsbestimmung noch benötigte Daten 12, 13 werden vom Waffensystem ebenfalls zum Rechner 6 geführt.

Der obere Teil der Figur zeigt diese Anordnung in der Seitenansicht.

Die Messung der Entfernung zu einem anfliegenden Ziel kann wie folgt ablaufen. Das erste passive Infrarot-Ortungsgerät 3 ist auf ein Ziel 1 aufgeschaltet und verfolgt dieses kontinuierlich, indem die Antriebe für Azimut 9 und Elevation 10 der Plattform 2 aus einem Ablagen- Mess- und -Regelsystem 8 ständig mit Daten versorgt werden. Das Ablagen- Mess- und -Regelsystem 8 selbst wird vom ersten passiven Infrarot-Ortungsgerät 3 direkt mit den Daten über die aktuelle Lage
des Ziels 1 versorgt. Die entsprechenden Datenwege sind in der Figur mit Pfeilen angedeutet. Somit wird die Plattform 2 und mit ihr auch das erste passive Infrarot-Ortungsgerät 3 über entsprechende Stellmotoren derart nachgeführt, dass das Ziel 1 im angemessenen Winkelbereich verbleibt, welcher dem Erfassungsbereich des erste passiven Infrarot-Ortungsgeräts 3 entspricht.

Die Genauigkeit der Auflösung bei der Nachführung liegt bei passiven Infrarot-Ortungsgeräten üblicherweise im Bereich von 0,01 bis 0,1 mrad. Wird das Ziel 1 parallel mit einem weiteren passiven Infrarot-Ortungsgerät 4 beobachtet, das die gleichen Eigenschaften wie das erste passive Infrarot-Ortungsgerät 3 besitzt und sich in einem seitlichen Abstand zum ersten passiven Infrarot-Ortungsgerät 3 von möglichst mehr als 1 Meter befindet, so ergibt sich ein Winkel α zwischen den Erfassungsrichtungen 5 der beiden Ortungsgeräte 3, 4, wenn beide auf das Ziel 1 aufgeschaltet sind. Aus diesem Winkel α kann in einer entsprechenden Einrichtung 14, die auch mit dem Rechner 6 über eine Zuleitung 13 verbunden ist, unter Zuhilfenahme des Abstands a zwischen den beiden Ortungsgeräten 3 und 4 trigonometrisch der Abstand vom ersten passiven Infrarot-Ortungsgerät 3 zum Ziel 1 gemäß der Beziehung b= a/tan α ermittelt werden.

Da die Fehler hinsichtlich der Nachführgenauigkeit der Stellmotoren in beiden Fällen identisch sind subtrahieren sich diese. Es geht also immer nur die Differenz der Erfassungsrichtungen 5 der beiden Ortungsgeräte 3 und 4 in die Messung ein. Vorteilhaft ist bei diesem Verfahren, dass aufgrund der Analyse des Verlaufs der Änderung der Lage des Ziels 1 hinsichtlich der Bewegung im Erfassungsbereich und der Entfernung recht sicher ein Vogel von einem reellen Ziel unterschieden werden kann.

## Patentansprüche

1. Vorrichtung zur Messung der Entfernung zu einem anfliegenden Ziel (1) umfassend
- eine auf das Ziel (1) nachführbare Plattform (2);
- ein erstes passives Infrarot-Ortungsgerät (3), das auf der Plattform (2) fest montiert ist, und das zur Erfassung und Aufschaltung auf das anfliegende Ziel und zur Versorgung von Daten über die aktuelle Lage des Ziels (1) ausgestaltet ist;
- ein weiteres passives Infrarot-Ortungsgerät (4), das in einer azimutalen Entfernung (a) zum ersten passiven Ortungsgerät (3) auf der Plattform (2) schwenkbar und/ oder auf das Ziel (1) nachführbar angeordnet ist, welches ebenfalls zur Erfassung und Aufschaltung auf das anfliegende Ziel ausgestaltet ist;
- ein Ablagen- Mess- und Regelsystem (8), das mit dem ersten passiven Infrarot-Ortungsgerät (3) verbunden ist;
- einen Azimut-Antrieb (9), der so ausgestaltet ist, dass die Plattform (2) in einer horizontalen Richtung auf das Ziel (1) nachführbar ist, wobei der Azimut-Antrieb (9) mit dem Ablagen- Mess- und Regelsystem (8) verbunden ist, und wobei die Vorrichtung so ausgestaltet ist, dass das erste passive Infrarot-Ortungsgerät (3) auf das Ziel (1) aufgeschaltet ist und dieses kontinuierlich verfolgt, indem der Azimut-Antrieb (9) aus dem Ablagen- Mess- und Regelsystem (8) ständig mit Daten versorgt wird;
- einen Rechner (6), der mit beiden passiven Infrarot-Ortungsgeräten (3, 4) und mit dem Ablagen- Mess- und Regelsystem (8) verbunden ist,
- eine Einrichtung (14), die auch mit dem Rechner (6) verbunden ist, und die so ausgestaltet ist, dass der Abstand vom ersten passiven Infrarot-Ortungsgerät (3) zum Ziel aus dem Winkel (α) zwischen den Erfassungsrichtungen der beiden Ortungsgeräte (3, 4) unter Zuhilfenahme der Entfernung (a) zwischen den beiden Ortungsgeräten (3, 4), wenn beide auf das Ziel aufgeschaltet sind, ermittelt wird,
wobei beide passiven Infrarot-Ortungsgeräte (3, 4) jeweils eine Auflösung im Bereich von 0,01 bis 0,1 mrad aufweisen;
wobei das Ablagen- Mess- und Regelsystem (8) so ausgestaltet ist, dass aufgrund der aktuellen Lage des Ziels (1) die Winkelgeschwindigkeit (11) der Plattform (2) bestimmt wird und zum Rechner (6) geleitet wird; und
wobei der Rechner (6) so ausgestaltet ist, dass ein für die Schussfreigabe (7) einer Waffe (12) relevantes Ausgangssignal ausgegeben wird.

## Claims

1. Device for measuring the distance to an approaching target (1), comprising
- a platform (2) which can be tracked to the target (1);
- a first passive infrared detection device (3), which is mounted fixedly on the platform (2) and which is configured to sense and lock onto the approaching target and to supply data concerning the current position of the target (1);
- a further passive infrared detection device (4), which is arranged at an azimuthal distance (a) from the first passive detection device (3) so as to be pivotable on the platform (2) and/or trackable to the target (1), and which is also configured to sense and lock onto the approaching target;
- a storage, measurement and control system (8), which is connected to the first passive infrared sensing device (3) ;
- an azimuthal drive (9), which is configured in such a way that the platform (2) can be tracked to the target (1) in a horizontal direction, the azimuthal drive (9) being connected to the storage, measurement and control system (8), and the device being configured in such a way that the first passive infrared detection device (3) is locked onto the target (1) and follows it continuously, in that the azimuthal drive (9) is constantly supplied with data from the storage, measurement and control system (8);
- a computer (6), which is connected to both passive infrared detection devices (3, 4) and to the storage, measurement and control system (8),
- a device (14), which is also connected to the computer (6) and which is configured in such a way that the distance from the first passive infrared detection device (3) to the target is determined from the angle (α) between the sensing directions of the two detection devices (3, 4) together with the distance (a) between the two sensing devices (3, 4) when they are both locked onto the target,
wherein the two passive infrared detection devices (3, 4) each have a resolution in the range of 0.01 to 0.1 mrad; wherein the storage, measurement and control system (8) is configured in such a way that the angular speed (11) of the platform (2) is determined on the basis of the current position of the target (1) and passed to the computer (6); and
wherein the computer (6) is configured in such a way that an output signal relevant to the launch (7) of a weapon (12) is outputted.

## Revendications

1. Dispositif de mesure de la distance à une cible en approche (1) comprenant
- une plate-forme (2) pouvant être asservie à la cible (1) ;
- un premier appareil de localisation passif à infrarouge (3), qui est monté de manière fixe sur la plate-forme (2) et qui est conçu pour détecter et se verrouiller sur la cible en approche ainsi que pour fournir des données sur la position actuelle de la cible (1) ;
- un autre appareil de localisation passif à infrarouge (4), qui est disposé sur la plate-forme (2) à une distance azimutale (a) du premier appareil de localisation passif (3) de manière à pouvoir pivoter et/ou être asservi à la cible (1), et qui est également conçu pour détecter et se verrouiller sur la cible en approche ;
- un système de mesure et de régulation de dérive (8) qui est relié au premier appareil de localisation passif à infrarouge (3) ;
- un entraînement en azimut (9), qui est conçu de telle sorte que la plate-forme (2) peut être asservie à la cible (1) dans une direction horizontale, dans lequel l'entraînement en azimut (9) est relié au système de mesure et de régulation de dérive (8) et dans lequel le dispositif est conçu de telle sorte que le premier appareil de localisation passif à infrarouge (3) est asservi à la cible (1) et suit celle-ci en continu, l'entraînement en azimut (9) étant alimenté en permanence en données provenant du système de mesure et de régulation de dérive (8) ;
- un ordinateur (6) qui est relié aux deux appareils de localisation passifs à infrarouge (3, 4) et au système de mesure et de régulation de dérive (8),
- un moyen (14), qui est également relié à l'ordinateur (6) et qui est conçu de telle sorte que la distance entre le premier appareil de localisation passif à infrarouge (3) et la cible est déterminée à partir de l'angle (α) entre les directions de détection des deux appareils de localisation (3, 4) à l'aide de la distance (a) entre les deux appareils de localisation (3, 4) lorsque tous deux sont verrouillés sur la cible,
dans lequel les deux appareils de localisation passifs à infrarouge (3, 4) présentent chacun une résolution comprise entre 0,01 et 0,1 mrad ;
dans lequel le système de mesure et de régulation de dérive (8) est conçu de telle sorte que la vitesse angulaire (11) de la plate-forme (2) est déterminée sur la base de la position actuelle de la cible (1) et est transmise à l'ordinateur (6) ; et
dans lequel l'ordinateur (6) est conçu de telle sorte qu'un signal de sortie approprié pour l'autorisation de tir (7) d'une arme (12) est émis.
